# EUROPEAN PATENT APPLICATION

(11) **EP 4 588 839 A1**
(43) Date of publication of application: **23.07.2025**
(21) Application number: 24153045.0
(22) Date of filing: 22.01.2024
(51) Int. Cl.: B65G 1/04, B65G 1/06, B66F 9/06

(54) **STORAGE SYSTEM**

(71) Applicant: AUTOSTORE TECHNOLOGY AS, 5578 Nedre Vats (NO)
(72) Inventor: Klungland, Kjell Tore, 5578 Nedre Vats (NO); Austrheim, Trond, 5578 Nedre Vats (NO)
(74) Representative: Kilburn & Strode LLP

(57) **Abstract**

The present invention provides a storage system comprising a framework structure (100) having a plurality of storage columns (105) configured to accommodate a vertical stack of storage containers (106), a container handling vehicle (301) and a rail system (108) upon which the container handling vehicle may move; the container handling vehicle comprises a lifting device (304) having a lifting frame (304d) configured to lower and raise a storage container (106), the lifting frame having container connectors (304b) adapted to releasably engage connector recesses of a storage container (106), wherein the storage system comprises a service platform (3), the service platform comprises a floor section (6), the floor section being configured to be arranged on top of and supported by the rail system, the floor section comprises connector recesses (7) to which the container connectors (304b) of the lifting frame (304d) can releasably engage such that the container handling vehicle (301) can raise and lower the service platform (3) relative to the rail system and transport the service platform upon the rail system.

## Description

### TECHNICAL FIELD

The present invention relates to a storage system comprising a service platform, a service platform for a storage system and a method of providing access.

### BACKGROUND

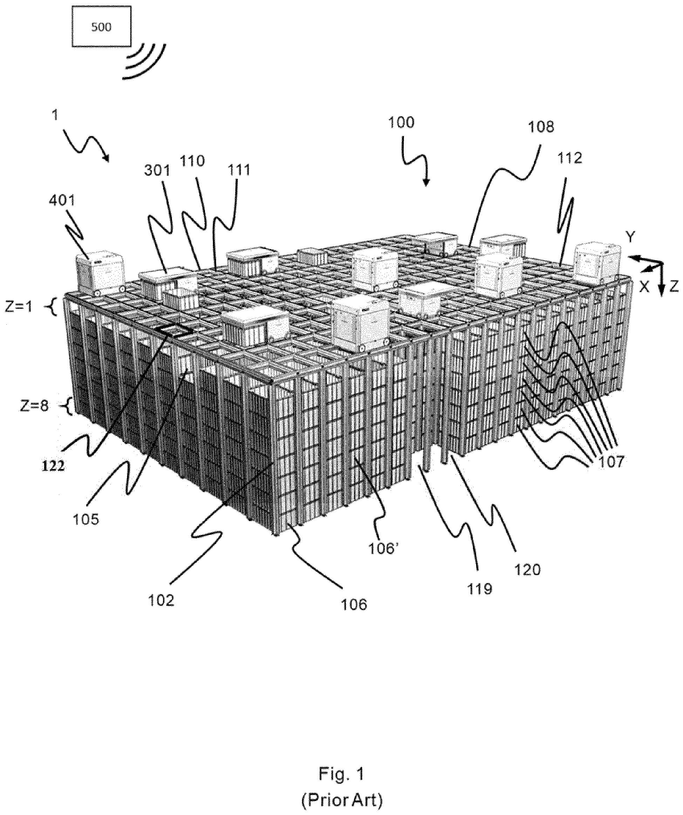

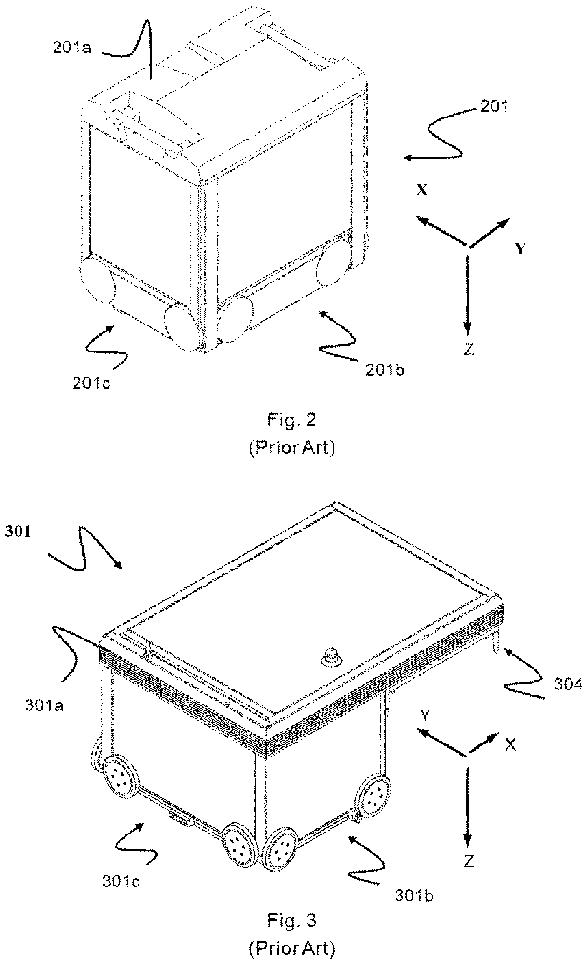

Fig. 1 discloses a prior art automated storage and retrieval system 1 with a framework structure 100 and Figs. 2, 3 and 4 disclose three different prior art container handling vehicles 201,301,401 suitable for operating on such a system 1.

The framework structure 100 comprises upright members 102 and a storage volume comprising storage columns 105 arranged in rows between the upright members 102. In these storage columns 105 storage containers 106, also known as bins, are stacked one on top of one another to form stacks 107. The members 102 may typically be made of metal, e.g. extruded aluminium profiles.

The framework structure 100 of the automated storage and retrieval system 1 comprises a horizontal grid-based rail system 108 (i.e. a rail grid) arranged across the top of framework structure 100, on which rail system 108 a plurality of container handling vehicles 201,301,401 may be operated to raise storage containers 106 from, and lower storage containers 106 into, the storage columns 105, and also to transport the storage containers 106 above the storage columns 105. The rail system 108 comprises a first set of parallel rails 110 arranged to guide movement of the container handling vehicles 201,301,401 in a first direction *X* across the top of the frame structure 100, and a second set of parallel rails 111 arranged perpendicular to the first set of rails 110 to guide movement of the container handling vehicles 201,301,401 in a second direction *Y* which is perpendicular to the first direction *X.* Containers 106 stored in the columns 105 are accessed by the container handling vehicles 201,301,401 through access openings 112 in the rail system 108. The rail system 108 defines a plurality of grid cells 122. A lateral area of a grid cell 122 includes the area of the access opening 112 and half the width of the rails at the periphery of the access opening. The container handling vehicles 201,301,401 can move laterally above the storage columns 105, i.e. in a plane which is parallel to the horizontal *X*-*Y* plane.

The upright members 102 of the framework structure 100 may be used to guide the storage containers during raising of the containers out from and lowering of the containers into the columns 105. The stacks 107 of containers 106 are typically self-supporting.

Each prior art container handling vehicle 201,301,401 comprises a vehicle body 201a,301a,401a and first and second sets of wheels 201b, 201c, 301b, 301c,401b,401c which enable the lateral movement of the container handling vehicles 201,301,401 in the *X* direction and in the *Y* direction, respectively. In Figs. 2, 3 and 4 two wheels in each set are fully visible. The first set of wheels 201b,301b,401b is arranged to engage with two adjacent rails of the first set 110 of rails, and the second set of wheels 201c,301c,401c is arranged to engage with two adjacent rails of the second set 111 of rails. At least one of the sets of wheels 201b, 201c, 301b,301c,401b,401c can be lifted and lowered, so that the first set of wheels 201b,301b,401b and/or the second set of wheels 201c,301c,401c can be engaged with the respective set of rails 110, 111 at any one time.

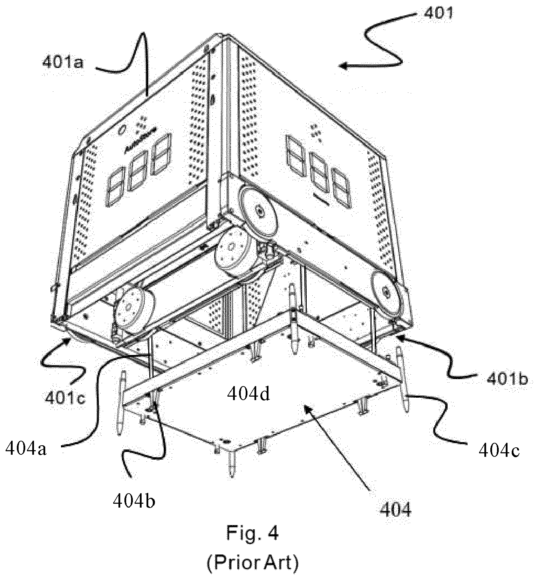

Each prior art container handling vehicle 201,301,401 also comprises a lift device 404, see Fig. 4, for vertical transportation of storage containers 106 (i.e. a container lift device), e.g. raising a storage container 106 from, and lowering a storage container 106 into, a storage column 105. The lift device 404 features a lifting frame 404d comprising container connectors 404b and guiding pins 404c adapted to engage a storage container 106. The lifting frame 404d can be lowered from the vehicle 201,301,401 so that the position of the lifting frame 404d with respect to the vehicle 201,301,401 can be adjusted in a third direction *Z* which is orthogonal the first direction *Y* and the second direction X. The lifting device of the container handling vehicle 201 is located within the vehicle body 201a in Fig. 2, and the lifting device 304 of the container handling vehicle 301 depends from a cantilevered section of the vehicle. The lifting devices of the container handling vehicles 201,301 illustrated in figs. 2 and 3 are identical to the lifting device 404 of the container handling vehicle in fig.4.

To raise or lower the lifting frame 404d (and optionally a connected storage container 106), the lifting frame 404d is suspended from a band drive assembly by lifting bands 404a. In the band drive assembly, the lifting bands are commonly spooled on/off at least one rotating lifting shaft or reel arranged in the container handling vehicle. Various designs of band drive assemblies are described in for instance WO 2015/193278 A1, WO 2017/129384 A1 and WO 2019/206438 A1.

Conventionally, and also for the purpose of this application, *Z*=1 identifies the uppermost layer available for storage containers below the rails 110,111, i.e. the layer immediately below the rail system 108, *Z*=2 the second layer below the rail system 108, *Z*=3 the third layer etc. In the exemplary prior art disclosed in Fig. 1, *Z*=8 identifies the lowermost, bottom layer of storage containers. Similarly, *X*=1...*n* and *Y*=1...*n* identifies the position of each storage column 105 in the horizontal plane. Consequently, as an example, and using the Cartesian coordinate system *X*, *Y*, *Z* indicated in Fig. 1, the storage container identified as 106' in Fig. 1 can be said to occupy storage position *X*=17, *Y*=1, *Z*=6. The container handling vehicles 201,301,401 can be said to travel in layer *Z*=0, and each storage column 105 can be identified by its *X* and *Y* coordinates. Thus, the storage containers shown in Fig. 1 extending above the rail system 108 are also said to be arranged in layer *Z*=0.

The storage volume of the framework structure 100 has often been referred to as a grid, where the possible storage positions within this grid are referred to as storage cells. Each storage column may be identified by a position in an *X-* and *Y-*direction, while each storage cell may be identified by a container number in the *X-*, *Y*- and *Z*-direction.

Each prior art container handling vehicle 201,301,401 comprises a storage compartment or space for receiving and stowing a storage container 106 when transporting the storage container 106 across the rail system 108. The storage space may comprise a cavity arranged internally within the vehicle body 201a,401a as shown in Figs. 2 and 4 and as described in e.g. WO2015/193278A1 and WO2019/206487A1, the contents of which are incorporated herein by reference.

Fig. 3 shows an alternative configuration of a container handling vehicle 301 with a cantilever construction. Such a vehicle is described in detail in e.g. NO317366, the contents of which are also incorporated herein by reference.

The cavity container handling vehicle 201 shown in Fig. 2 may have a footprint that covers an area with dimensions in the X and Y directions which is generally equal to the lateral extent of a storage column 105, e.g. as is described in WO2015/193278A1, the contents of which are incorporated herein by reference. The term 'lateral' used herein may mean 'horizontal'.

Alternatively, the cavity container handling vehicles 401 may have a footprint which is larger than the lateral area defined by a storage column 105 as shown in Fig. 1 and 4, e.g. as is disclosed in WO2014/090684A1 or WO2019/206487A1.

The lateral area defined by a storage column is equal to the lateral area defined by a grid cell 122 of the rail system 108. The lateral area of a grid cell includes the area of the access opening 112 and half the width of the rails at the periphery of the access opening.

The rail system 108 typically comprises rails with grooves in which the wheels of the vehicles run. Alternatively, the rails may comprise upwardly protruding elements, where the wheels of the vehicles comprise flanges to prevent derailing. These grooves and upwardly protruding elements are collectively known as tracks. Each rail may comprise one track, or each rail 110,111 may comprise two parallel tracks. In other rail systems 108, each rail in one direction (e.g. an X direction) may comprise one track and each rail in the other, perpendicular direction (e.g. a Y direction) may comprise two tracks. Each rail 110,111 may also comprise two track members that are fastened together, each track member providing one of a pair of tracks provided by each rail.

WO2018/146304A1, the contents of which are incorporated herein by reference, illustrates a typical configuration of rail system 108 comprising rails and parallel tracks in both *X* and *Y* directions.

In the framework structure 100, a majority of the columns 105 are storage columns 105, i.e. columns 105 where storage containers 106 are stored in stacks 107. However, some columns 105 may have other purposes. In Fig. 1, columns 119 and 120 are such special-purpose columns used by the container handling vehicles 201,301,401 to drop off and/or pick up storage containers 106 so that they can be transported to an access station (not shown) where the storage containers 106 can be accessed from outside of the framework structure 100 or transferred out of or into the framework structure 100. Within the art, such a location is normally referred to as a 'port' and the column in which the port is located may be referred to as a 'port column' 119,120. The transportation to the access station may be in any direction, that is horizontal, tilted and/or vertical. For example, the storage containers 106 may be placed in a random or dedicated column 105 within the framework structure 100, then picked up by any container handling vehicle and transported to a port column 119,120 for further transportation to an access station. The transportation from the port to the access station may require movement along various different directions, by means such as delivery vehicles, trolleys or other transportation lines. Note that the term 'tilted' means transportation of storage containers 106 having a general transportation orientation somewhere between horizontal and vertical.

In Fig. 1, the first port column 119 may for example be a dedicated drop-off port column where the container handling vehicles 201,301,401 can drop off storage containers 106 to be transported to an access or a transfer station, and the second port column 120 may be a dedicated pick-up port column where the container handling vehicles 201,301,401 can pick up storage containers 106 that have been transported from an access or a transfer station.

The access station may typically be a picking or a stocking station where product items are removed from or positioned into the storage containers 106. In a picking or a stocking station, the storage containers 106 are normally not removed from the automated storage and retrieval system 1 but are returned into the framework structure 100 again once accessed. A port can also be used for transferring storage containers to another storage facility (e.g. to another framework structure or to another automated storage and retrieval system), to a transport vehicle (e.g. a train or a lorry), or to a production facility.

A conveyor system comprising conveyors is normally employed to transport the storage containers between the port columns 119,120 and the access station.

If the port columns 119,120 and the access station are located at different levels, the conveyor system may comprise a lift device with a vertical component for transporting the storage containers 106 vertically between the port column 119,120 and the access station.

The conveyor system may be arranged to transfer storage containers 106 between different framework structures, e.g. as is described in WO2014/075937A1, the contents of which are incorporated herein by reference.

When a storage container 106 stored in one of the columns 105 disclosed in Fig. 1 is to be accessed, one of the container handling vehicles 201,301,401 is instructed to retrieve the target storage container 106 from its position and transport it to the drop-off port column 119. This operation involves moving the container handling vehicle 201,301,401 to a location above the storage column 105 in which the target storage container 106 is positioned, retrieving the storage container 106 from the storage column 105 using the container handling vehicle's 201,301,401 lift device 404, and transporting the storage container 106 to the drop-off port column 119. If the target storage container 106 is located deep within a stack 107, i.e. with one or a plurality of other storage containers 106 positioned above the target storage container 106, the operation also involves temporarily moving the above-positioned storage containers prior to lifting the target storage container 106 from the storage column 105. This step, which is sometimes referred to as "digging" within the art, may be performed with the same container handling vehicle that is subsequently used for transporting the target storage container to the drop-off port column 119, or with one or a plurality of other cooperating container handling vehicles. Alternatively, or in addition, the automated storage and retrieval system 1 may have container handling vehicles 201,301,401 specifically dedicated to the task of temporarily removing storage containers 106 from a storage column 105. Once the target storage container 106 has been removed from the storage column 105, the temporarily removed storage containers 106 can be repositioned into the original storage column 105. However, the removed storage containers 106 may alternatively be relocated to other storage columns 105.

When a storage container 106 is to be stored in one of the columns 105, one of the container handling vehicles 201,301,401 is instructed to pick up the storage container 106 from the pick-up port column 120 and transport it to a location above the storage column 105 where it is to be stored. After any storage containers 106 positioned at or above the target position within the stack 107 have been removed, the container handling vehicle 201,301,401 positions the storage container 106 at the desired position. The removed storage containers 106 may then be lowered back into the storage column 105 or relocated to other storage columns 105.

For monitoring and controlling the automated storage and retrieval system 1, e.g. monitoring and controlling the location of respective storage containers 106 within the framework structure 100, the content of each storage container 106, and the movement of the container handling vehicles 201,301,401 so that a desired storage container 106 can be delivered to the desired location at the desired time without the container handling vehicles 201,301,401 colliding with each other, the automated storage and retrieval system 1 comprises a control system 500 which typically is computerized and which typically comprises a database for keeping track of the storage containers 106.

An issue with automated storage and retrieval systems, as described above, is the difficulty in manually accessing equipment arranged on the grid when the equipment needs service, i.e. allowing service personnel access to the equipment. Such equipment includes container-handling vehicles, charging stations for container-handling vehicles etc. For instance, if a container-handling vehicle stops working while being out on the grid, there is no easy way for service personnel to reach the vehicle. One option is to use a service vehicle unit, which is a manually driven personnel vehicle. However, the area surrounding any equipment in need of service is usually made up of open ended storage columns, making the service work difficult to perform, at least in a secure manner.

A method of manually accessing equipment arranged on the grid is disclosed in WO 2019/081092 A1.

The present disclosure seeks to overcome or at least ameliorate the problems associated with the prior art.

### SUMMARY

In a first aspect, there is provided a storage system comprising a framework structure having a plurality of storage columns configured to accommodate a vertical stack of storage containers, a container handling vehicle and a rail system upon which the container handling vehicle may move; the container handling vehicle comprises a lifting device having a lifting frame configured to lower and raise a storage container, the lifting frame having container connectors adapted to releasably engage connector recesses of a storage container,
wherein
the storage system comprises a service platform, the service platform comprises a floor section, the floor section being configured to be arranged on top of and supported by the rail system, the floor section comprises connector recesses to which the container connectors of the lifting frame can releasably engage such that the container handling vehicle can raise and lower the service platform relative to the rail system and transport the service platform upon the rail system.

The container handling vehicle may move in two perpendicular directions above the storage columns; the rail system comprises a first set of parallel rails arranged to guide movement of the container handling vehicle in a first direction across the top of a frame structure, and a second set of parallel rails arranged perpendicular to the first set of rails to guide movement of the container handling vehicle in a second direction, the first and second sets of parallel rails defining a plurality of grid cells.

The service platform may comprise a railing connected to the floor section.

The railing of the service platform may be connected at a periphery of the floor section. The railing may be arranged on at least two opposite sides of the floor section.

In an embodiment of the storage system, the container handling vehicle may comprise a vehicle body, featuring at least one set of wheels for moving upon the rail system, and a cantilevered section extending laterally from an upper section of the vehicle body, and the lifting frame is configured to depend from the cantilevered section. The cantilevered section ensures that the lifting frame may be arranged above the floor section.

In an embodiment of the storage system, the floor section may cover at least two grid cells when the service platform is arranged on top of the rail system. The floor section may cover at least two grid cells in the first and second direction of the rail system.

In an embodiment of the storage system, the floor section may have an area larger than a lateral area of two adjacent grid cells. In other words, the floor section maybe larger, or cover more, than a lateral area of two adjacent grid cells. The lateral area of a grid cell includes the area of the access opening of a storage column and half the width of the rails at the periphery of the access opening. The floor section may be formed of any suitable material such as plywood.

In an embodiment of the storage system, the service platform may comprise guide elements arranged at a bottom surface thereof, the guide elements configured to engage with side portions of the rails to minimize horizontal movement of the service platform when the service platform is supported by the rail system. The guide elements may provide a lower portion of the connector recesses of the floor section. The guide elements may be formed as generally L-shaped blocks affixed to the lower surface of the service platform. The guide elements may fit and locate within the rails of a single grid cell.

In an embodiment of the storage system, the floor section may extend over more than one grid cell in each of the first direction and the second direction. The floor section may extend over at least two grid cells in each of the first direction and the second direction.

In an embodiment of the storage system, the service platform may comprises a docking recess in a side of the floor section, the docking recess being sized to receive a front portion of the container handling vehicle or a service vehicle. The boundary of the recess may be free of railings to allow a user to access the service platform unimpeded. The docking recess may be provided in one or more of the sides of the floor section so that a container handling vehicle may be received on different sides of the service platform. One or more service platforms maybe provided on the storage system and the service platforms may be arranged with their respective docking recess facing different directions.

The docking recess may be sized to receive a front portion of the container handling vehicle when the container connectors are positioned directly above the respective connector recesses of the floor section. The docking recess allows the connector recesses to be arranged around the centre of gravity of the service platform when the service platform extends over more than a single grid space.

The container handling vehicle may comprise at least one set of wheels for moving upon the rail system, and the docking recess may be configured to accommodate at least two wheels of the set of wheels. The container handling vehicle may have a vehicle body comprising a wheel base featuring the at least one set of wheels and a cantilevered section extending from a top portion of the vehicle body. The lifting frame may be suspended from the cantilevered section, and the docking recess may be sized to receive a part of the wheel base such that the cantilevered section extends above the floor section.

In an embodiment, the storage system may comprise a service vehicle, the service vehicle is configured to accommodate a human operator and comprises wheels for moving the service vehicle in the first direction and the second direction upon the rail system. The service vehicle may comprise a first set of wheels and a second set of wheels, wherein at least one of the sets of wheels can be lifted and lowered, so that the first set of wheels and the second set of wheels can be engaged with a respective set of rails at any one time.

In an embodiment of the storage system, the docking recess may be configured to accommodate a front portion of the service vehicle, such that an operator may move directly between the service vehicle and the service platform without stepping on the rails of the rail system. The docking recess may be rectangular in form. Having the docking recess configured to accommodate a front portion of the service vehicle allows safe transfer of the operator between the service vehicle and the service platform.

In an embodiment of the storage system, the lifting frame may comprise guiding pins extending below a bottom surface of the lifting frame, and the floor section comprises holes in which the guiding pins may be inserted when the lifting frame is releasably engaged to the service platform. The number of holes in the floor section may correspond with the number of guiding pins. There may be two holes.

In an embodiment of the storage system, the floor section may be configured to extend along opposite sides of the vehicle body of the container handling vehicle when the service platform is lifted by the container handling vehicle. The floor section may extend over at least half a grid cell on opposite sides of the vehicle body and/or the cantilevered section when the service platform is lifted by the container handling vehicle.

In an embodiment of the storage system, the floor section may comprise one or more vertical side barriers configured to prevent items from sliding off the floor section. The vertical side barriers may extend from the floor section. The vertical side barriers and a service vehicle or container handling vehicle arranged in the docking recess of the floor section may form a barrier extending on all sides of the floor section.

In a second aspect, there is provided a service platform for a storage system according to any embodiment of the first aspect, the service platform comprises a floor section, the floor section being configured to be arranged on top of and supported by a rail system, the floor section comprises connector recesses for engagement to a lifting frame.

The service platform may comprise four connector recesses. The connector recesses may be positioned to define the corners of a rectangle.

The service platform may comprise a railing connected to the floor section. The railing may extend approximately to the waist height of a user. The railings may comprise tubular sections and may be formed of metal.

In an embodiment, the service platform may comprise a docking recess in a side of the floor section, the docking recess arranged at a gap, break or discontinuity in the railing.

In an embodiment, the service platform may comprise guide elements arranged at and extending below a bottom surface of the floor section.

In an embodiment of the service platform, the floor section may comprise one or more vertical side barriers configured to prevent items from sliding off the floor section.

In a third aspect, the present invention provides a method of providing access for a human operator to equipment on the rail system of a storage system according to any embodiment of the first aspect, the method comprising the steps of:
moving the container handling vehicle to the service platform;
lifting the service platform up from the rail system by use of the lifting frame;
moving the container handling vehicle and the service platform to the equipment;
lowering the service platform down on the rail system at a position adjacent to the equipment by use of the lifting frame;
moving the operator from a position external to the rail system to the service platform.

In an embodiment of the method, the operator may be moved from the position external to the rail system to the service platform by a service vehicle.

In an embodiment, the method may comprise the steps of:
accommodating a portion of the service vehicle in the docking recess;
connecting the service vehicle to the service platform; or
securing the service vehicle relative to the service platform;
such that the railing and the service vehicle provides a safety barrier surrounding the operator when positioned on the floor section.

In an embodiment of the method, the operator may move from the position external to the rail system to the service platform by walking upon a plurality of floor elements, each floor element supported on top of a stack of storage containers.

### BRIEF DESCRIPTION OF THE DRAWINGS

Embodiments of the present invention are described in detail by way of example only and with reference to the following drawings:
Fig. 1 is a perspective view of a framework structure of a prior art automated storage and retrieval system.
Fig. 2 is a perspective view of a prior art container handling vehicle having an internally arranged cavity for carrying storage containers therein.
Fig. 3 is a perspective view of a prior art container handling vehicle having a cantilever for carrying storage containers underneath.
Fig. 4 is a perspective view, seen from below, of a prior art container handling vehicle having an internally arranged cavity for carrying storage containers therein.
Figs. 5-8 are perspective views of an exemplary storage system according to the invention.
Fig. 9 is a perspective top view of an exemplary service platform according to the invention.
Fig. 10 is a perspective bottom view of the service platform in fig. 9.
Fig. 11 is a top view of the service platform in fig. 9; and
Fig. 12 is a side view of the service platform in fig. 9.

### DETAILED DESCRIPTION

In the following, embodiments of the invention will be discussed in more detail with reference to the appended drawings. It should be understood, however, that the drawings are not intended to limit the invention to the subject-matter depicted in the drawings.

As mentioned above, service vehicles may be used to transfer a human operator on a rail system 108 of a storage system 1 to e.g. allow access for repairing or retrieving malfunctioning equipment, such as a container handling vehicle 201,301,401 or a charging station 14.

However, the service vehicles are commonly quite small, having only room for a single human operator, and does not provide a sufficient or optimal workspace upon the rail system. Other operations that may be required upon the rail system include cleaning of the rail system and retrieval of storage containers that are stuck within the storage columns. Larger specialized service vehicles for providing a larger workspace, cleaning the rail system etc. may be envisioned, but would be costly and require an extended wheel assembly for sufficient support and correct movement of the service vehicle upon the rail system.

The present invention provides a storage system in which a human operator may perform operations upon the rail system in a safe and simple manner.

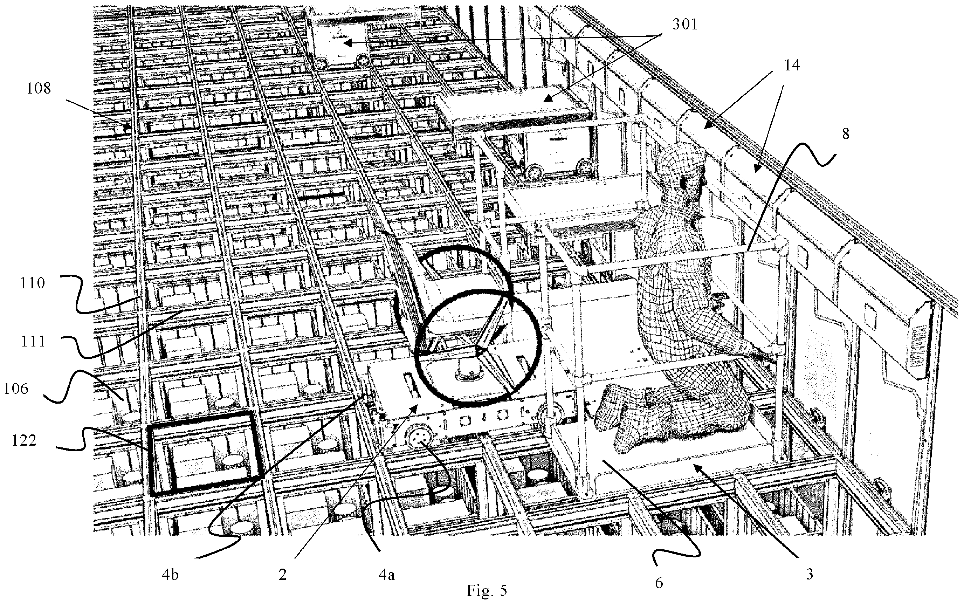

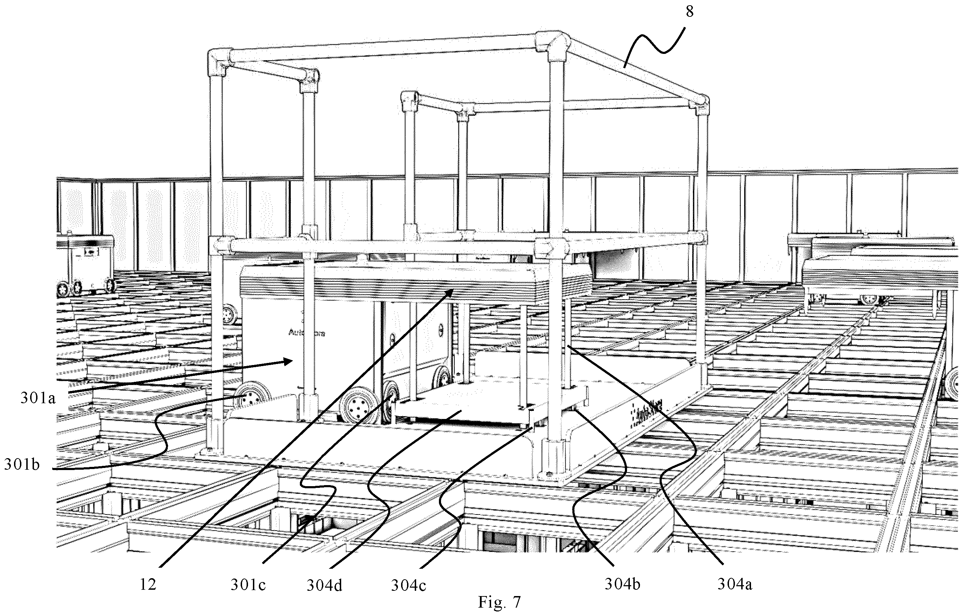

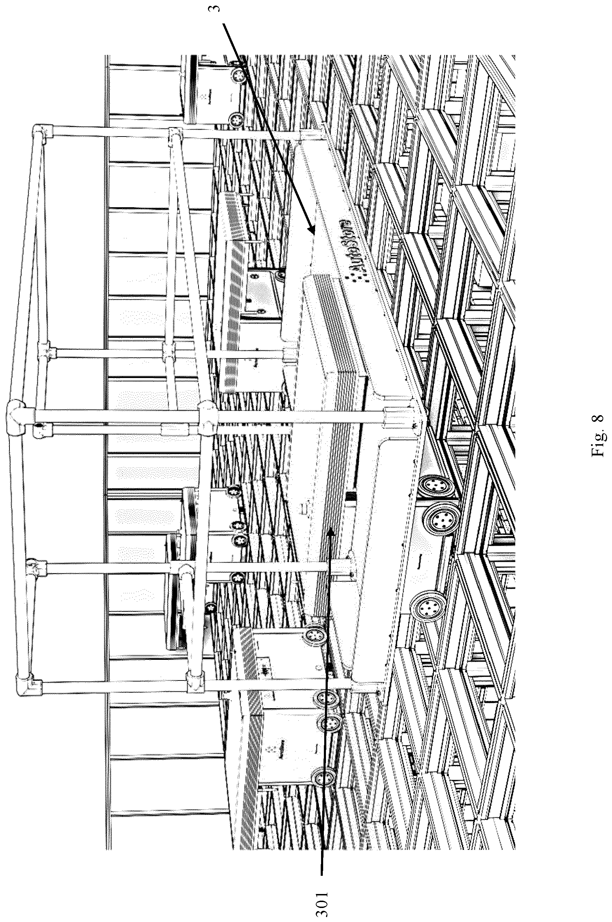

An exemplary storage system according to the invention is illustrated in figs. 5-8. Similar to the prior art storage system in fig.1, the inventive storage system comprises a framework structure 100 having a plurality of storage columns 105 for accommodating a vertical stack of storage containers 106, a container handling vehicle 301 and a rail system 108 upon which the container handling vehicle 301 may move in two perpendicular directions above the storage columns 105.

The rail system 108 comprises a first set of parallel rails 110 arranged to guide movement of the container handling vehicle 301 in a first direction across the top of a frame structure 100, and a second set of parallel rails 111 arranged perpendicular to the first set of rails 110 to guide movement of the container handling vehicle 301 in a second direction, the first and second sets of parallel rails 110,111 defining a plurality of grid cells 122. The grid cell are sized to allow passage of a storage container into and out of the storage columns.

The container handling vehicle 301 in the exemplary storage system is similar to the prior art container handling vehicle 301 described in the background section. The container handling vehicle 301 comprises a vehicle body 301a and a lifting device 304 having a lifting frame 304d. The lifting frame is configured to lower and raise a storage container 106 and has container connectors 304b adapted to releasably engage connector recesses of the storage container 106. The vehicle body 301a has a first set of wheels 301 b and a second set of wheels 301c for moving the container handling vehicle 301 upon the rail system 108. A cantilevered section 12 extends laterally from an upper section of the vehicle body 301a, and the lifting frame 304d is configured to depend from the cantilevered section via a set of lifting bands 304a.

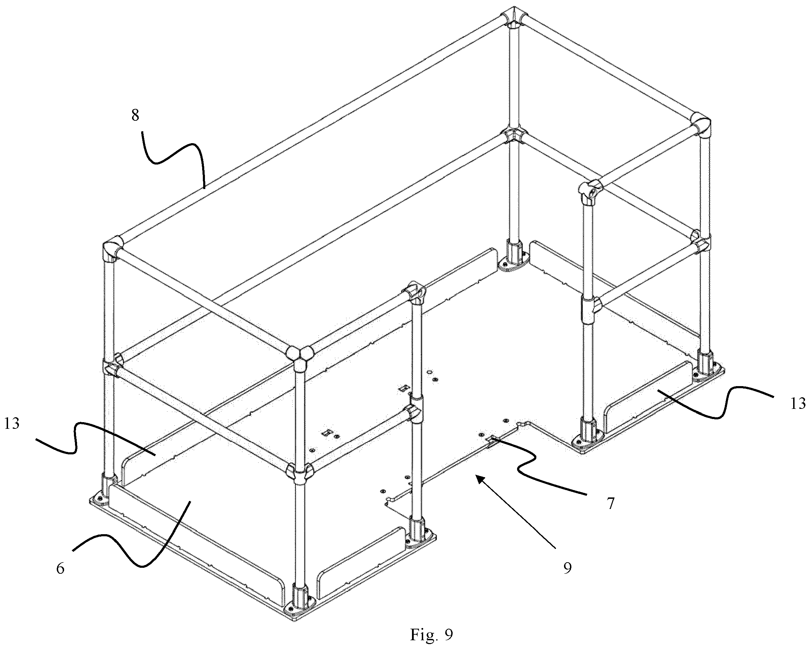

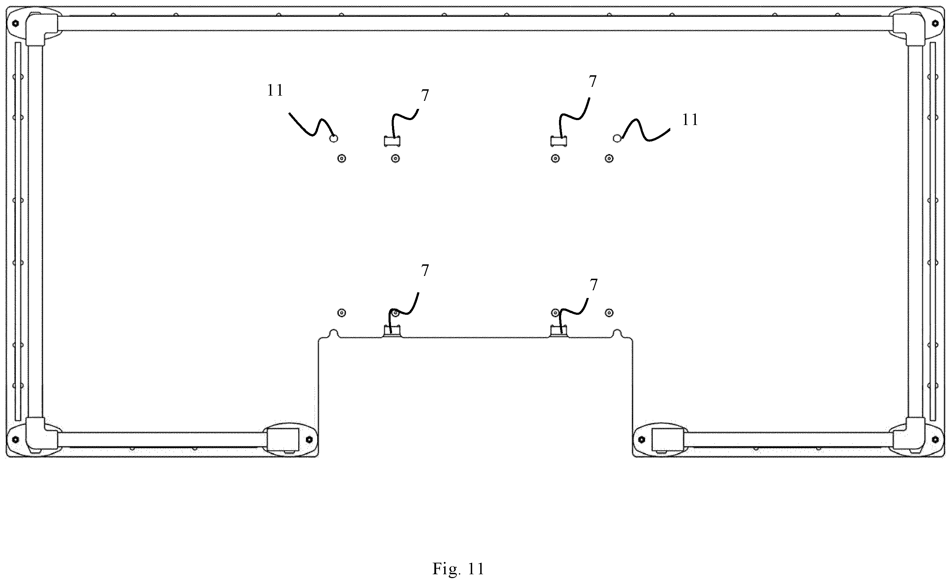

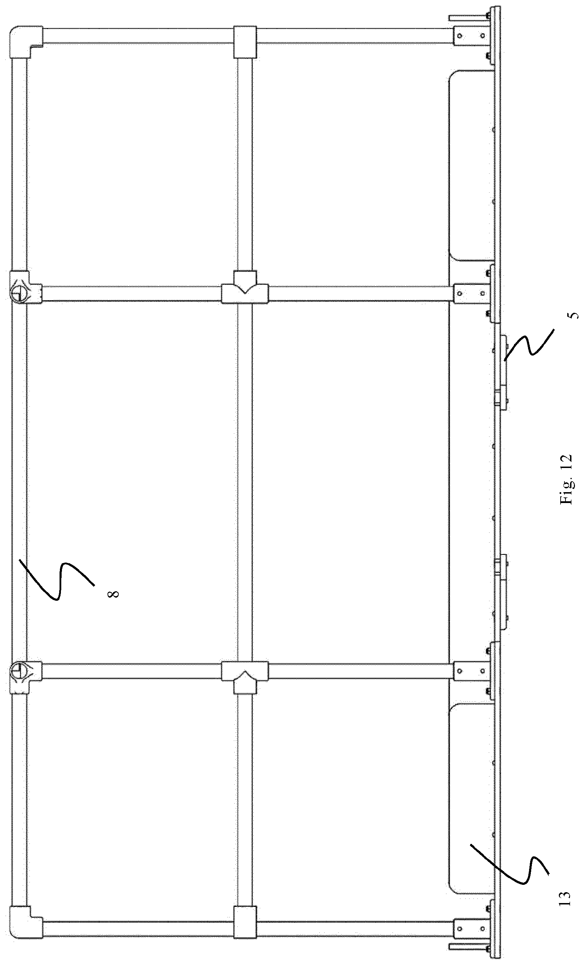

To provide a working space for a human operator upon the rail system 108, the storage system comprises a service platform 3, see figs. 9-12. The service platform 3 comprises a floor section 6 and a railing 8. The floor section 3 is configured to be arranged on top of and supported by the rail system 108. The floor section 3 comprises connector recesses 7 to which the container connectors 304b of the lifting frame 304d can releasably engage.

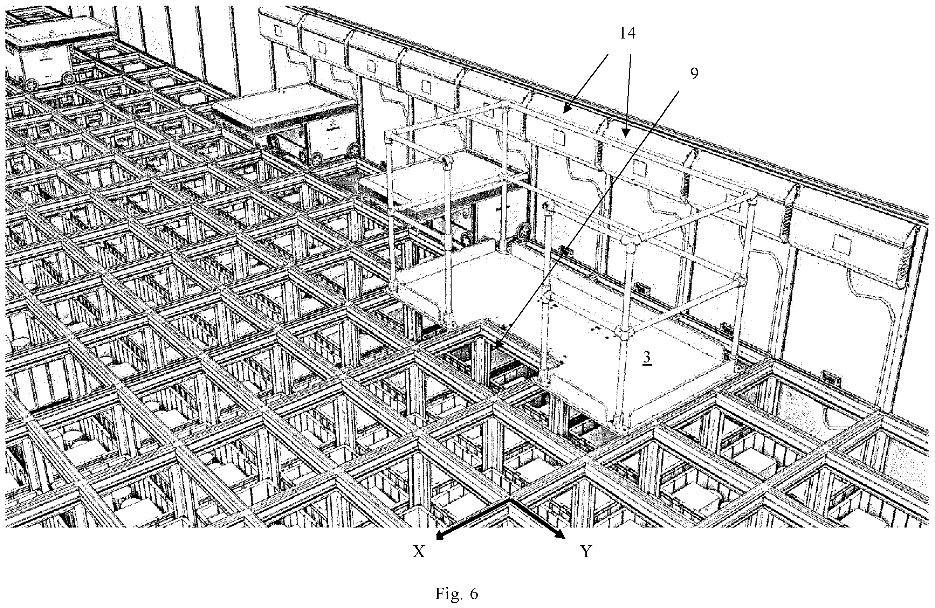

In this manner, the container handling vehicle 301 can raise and lower the service platform 3 relative to the rail system 108 and transport the service platform 3 upon the rail system 108 to a position at which a working space is required. In the storage system illustrated in figs. 5 and 6, the service platform is arranged adjacent a row of charging stations 14 requiring service.

In the exemplary service platform, the floor section 6 extends over two grid cells 122 in the first direction X of the rail system 108 and three grid cells 122 in the second direction Y. In other embodiments, the size of the floor section may vary provided it covers at least two grid cells 122 such that the service platform 3 is sufficiently supported by the rails 110,111 of the rail system along the first and second direction.

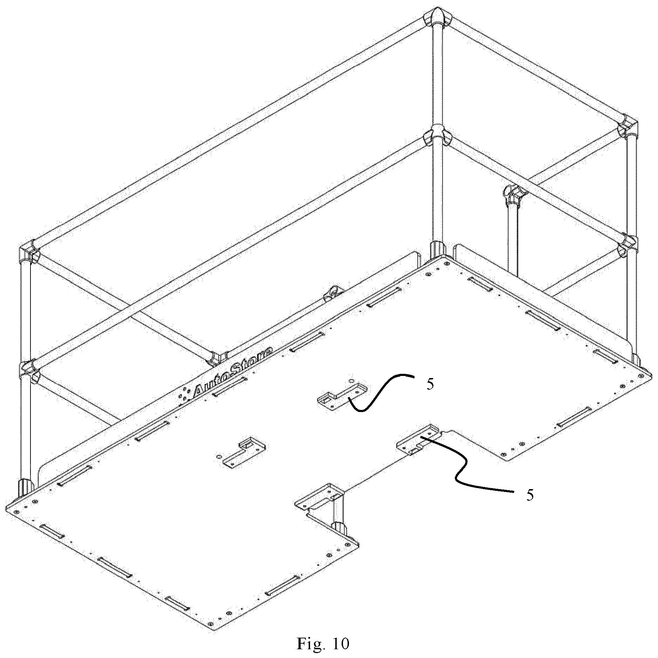

The service platform 3 comprises guide elements 5 arranged at a bottom surface thereof, see fig. 10. The guide elements 5 are configured to engage with side portions of the rails 110,111 to minimize or prevent horizontal movement of the service platform 3 when the service platform is supported by the rail system 108. In the exemplary service platform, the guide elements 5 are configured to be arranged within an access opening 112 defined by a single grid cell 122 when the service platform 3 is supported by the rail system 108.

The service platform 3 comprises a docking recess 9 in a side of the floor section 6. The docking recess 9 is sized to receive a front portion of the vehicle body 301a of the container handling vehicle 301. The docking recess 9 allows the connector recesses 7 of the floor section 3 to be arranged close to or at the centre of gravity of the service platform 3. Without the recess 9, the centre of the lifting frame 304 would be closer to the periphery of the floor section of the exemplary service platform 3 causing imbalance during lifting and transportation of the service platform. The recess 9 has a width corresponding to the width of a grid cell 122 in the second direction. When the front portion of the vehicle body 301a is fully arranged in the recess 9, the container connectors 304b are positioned directly above the respective connector recesses 7 of the floor section 6.

A service vehicle 2 suitable for transporting a human operator to the service platform 3 is illustrated in fig. 5. The service vehicle 2 is configured to accommodate a human operator and features a wheel assembly having a first set of wheels 4a and a second set of wheels 4b for moving the service vehicle in two perpendicular directions upon the rail system 108. One of the sets of wheels can be lifted and lowered, so that the first set of wheels 4a and the second set of wheels 4b can be engaged with a respective set of rails 110,111 at any one time.

To prevent items such as tools and spare parts from sliding of the service platform 3, the floor section 6 comprises vertical side barriers 13. When a service vehicle 2 is accommodated or received in the docking recess 9, the service vehicle 2 and the side barriers 13 form a barrier extending around the periphery of the floor section 6.

It is noted that in other embodiments of the inventive storage system, the system may have more than one service platform that may be arranged adjacent to each other to provide a larger workspace, e.g. one service platform as shown, but without a railing on the side opposite the docking recess 9 and another service platform covering 3×1 grid cells with railing on three sides thereof.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

### LIST OF REFERENCE NUMERALS

- 1: Prior art automated storage and retrieval system
- 2: Service vehicle
- 3: Service platform
- 4a,4b: Wheels, first set of wheels, second set of wheels
- 5: Guide elements
- 6: Floor section
- 7: Connector recesses of the floor section
- 8: Railing
- 9: Docking recess
- 10: Human operator
- 11: Holes for guiding pins
- 12: Cantilevered section
- 13: Barrier
- 100: Framework structure
- 102: Upright members of framework structure
- 104: Storage grid
- 105: Storage column
- 106: Storage container
- 106': Particular position of storage container
- 107: Stack
- 108: Rail system
- 110: Parallel rails in first direction (X)
- 112: Access opening
- 119: First port column
- 120: Second port column
- 201: Prior art container handling vehicle
- 201a: Vehicle body of the container handling vehicle 201
- 201b: Drive means / wheel arrangement / first set of wheels in first direction (*X*)
- 201c: Drive means / wheel arrangement / second set of wheels in second direction (*Y*)
- 301: Prior art cantilever container handling vehicle
- 301a: Vehicle body of the container handling vehicle 301
- 301b: Drive means / first set of wheels in first direction (*X*)
- 301c: Drive means / second set of wheels in second direction (*Y*)
- 304: Gripping device
- 304a: Lifting band
- 304b: Gripper
- 304c: Guide pin
- 304d: Lifting frame
- 401: Prior art container handling vehicle
- 401a: Vehicle body of the container handling vehicle 401
- 401b: Drive means / first set of wheels in first direction (*X*)
- 401c: Drive means / second set of wheels in second direction (*Y*)
- 404: Gripping device
- 404a: Lifting band
- 404b: Gripper
- 404c: Guide pin
- 404d: Lifting frame
- 500: Control system
- *X*: First direction
- *Y*: Second direction
- *Z*: Third direction

## Claims

1. A storage system comprising a framework structure (100) having a plurality of storage columns (105) configured to accommodate a vertical stack of storage containers (106), a container handling vehicle (301) and a rail system (108) upon which the container handling vehicle may move;
the container handling vehicle comprises a lifting device (304) having a lifting frame (304d) configured to lower and raise a storage container (106), the lifting frame having container connectors (304b) adapted to releasably engage connector recesses of a storage container (106),
wherein
the storage system comprises a service platform (3), the service platform comprises a floor section (6), the floor section being configured to be arranged on top of and supported by the rail system, the floor section comprises connector recesses (7) to which the container connectors (304b) of the lifting frame (304d) can releasably engage such that the container handling vehicle (301) can raise and lower the service platform (3) relative to the rail system and transport the service platform upon the rail system.

2. A storage system according to claim 1, wherein the service platform comprises a railing (8) connected to the floor section.

3. A storage system according to claim 1 or 2, wherein the floor section (6) covers at least two grid cells (122) when the service platform is arranged on top of the rail system (108).

4. A storage system according to any of the preceding claims, wherein the service platform (3) comprises guide elements (5) arranged at a bottom surface thereof, the guide elements configured to engage with side portions of the rails to minimize horizontal movement of the service platform (3) when the service platform is supported by the rail system.

5. A storage system according to any of the preceding claims, wherein the floor section extends over more than one grid cell in each of the first direction (X) and the second direction (Y).

6. A storage system according to any of the preceding claims, wherein the service platform comprises a docking recess (9) in a side of the floor section (6), the docking recess being sized to receive a front portion of the container handling vehicle (301) or a service vehicle.

7. A storage system according to any of the preceding claims, wherein the lifting frame (304d) comprises guiding pins (304c) extending below a bottom surface of the lifting frame, and the floor section comprises holes (11) in which the guiding pins (304c) may be inserted when the lifting frame is releasably engaged to the service platform.

8. A storage system according to any of the preceding claims, wherein the floor section extends along opposite sides of the vehicle body (301a) of the container handling vehicle (301) when the service platform is lifted by the container handling vehicle.

9. A storage system according to any of the preceding claims, wherein the floor section comprises one or more vertical side barriers (13) configured to prevent items from sliding off the floor section.

10. A service platform for a storage system according to any of the preceding claims, the service platform comprises a floor section (6), the floor section being configured to be arranged on top of and supported by the rail system, the floor section comprises connector recesses (7) for engagement to a lifting frame of a container handling vehicle.

11. A service platform according to claim 12, comprising a docking recess (9) in a side of the floor section (6), the docking recess arranged at a gap in the railing.

12. A service platform according to claim 12 or 13, comprising guide elements (5) arranged at and extending below a bottom surface of the floor section (6).

13. A service platform according to any of claims 12-14, wherein the floor section comprises one or more vertical side barriers (13) configured to prevent items from sliding off the floor section.

14. A method of providing access for a human operator to equipment on the rail system (108) of the storage system according to any of claims 1-9, comprising the steps of:
- moving the container handling vehicle (301) to the service platform (3);
- lifting the service platform up from the rail system by use of the lifting frame (304d);
- moving the container handling vehicle and the service platform to the equipment;
- lowering the service platform down on the rail system at a position adjacent to the equipment by use of the lifting frame;
- moving the operator from a position external to the rail system to the service platform.

15. A method according to claim 16, wherein the operator is moved from the position external to the rail system to the service platform by a service vehicle (2).
